Europäisches Patentamt

European Patent Office

Office européen des brevets

(19)

(11) Veröffentlichungsnummer : **0 208 002**
**B1**

(12) **EUROPÄISCHE PATENTSCHRIFT**

(45) Veröffentlichungstag der Patentschrift :
03.01.90

(21) Anmeldenummer : 85108352.7

(22) Anmeldetag : 05.07.85

(51) Int. Cl.[5] : **G 01 S   7/52**, G 01 S 15/89,
**G 10 K 11/34**

(54) Verfahren und Vorrichtung zur Ultraschallabtastung eines Objekts mit einem Ultraschallkopf.

(43) Veröffentlichungstag der Anmeldung :
14.01.87 Patentblatt 87/03

(45) Bekanntmachung des Hinweises auf die Patenterteilung : 03.01.90 Patentblatt 90/01

(84) Benannte Vertragsstaaten :
AT FR GB NL

(56) Entgegenhaltungen :
EP–A– 0 012 165
EP–A– 0 161 587
DE–A– 2 643 918
DE–A– 3 121 513
GB–A– 2 021 767
GB–A– 2 041 525
GB–A– 2 045 435
JOURNAL OF THE ACOUSTICAL SOCIETY OF AMERICA, Band 68, Nr. 4, Oktober 1980, pages 1142-1148, Acoustical Society of America, New York, US; C.M. LOCKHART et al.: "Generalized shading formula from a given line shading"
PROCEEDINGS OF THE 10th INTERNATIONAL SYMPOSIUM ON ACOUSTICAL IMAGING, Band 10, 12.-16. Oktober 1980, Cannes, FR, Seiten 455-492, Plenum Press, New York, US; A.J. DUERINCKX: "Matched gaussian apodization of pulsed acoustic phased arrays"

(73) Patentinhaber : Siemens Aktiengesellschaft
Wittelsbacherplatz 2
D-8000 München 2 (DE)

(72) Erfinder : Hassler, Dietrich, Dipl.-Ing.
Flurweg 3
D-8525 Uttenreuth (DE)

## Beschreibung

Die Erfindung bezieht sich auf ein Verfahren zur Ultraschallabtastung eines Objekts, bei dem mittels eines aus einer Vielzahl von nebeneinander angeordneten Wandlerelementen bestehenden Ultraschallkopfes Ultraschallimpulse jeweils entlang unterschiedlicher geradliniger Abtastzeilen in das Objekt eingesendet werden, die Echosignale als Funktion der Abtasttiefe in jeweils auf einen Ultraschallimpuls folgenden Empfangsperioden erfaßt werden, während jeder Empfangsperiode die Apertur des Ultraschallkopfes ausgehend von einem Anfangswert als Funktion der Abtasttiefe stufenweise durch Aktivierung einer zunehmenden Zahl von Wandlerelementen vergrößert wird und die Richtungscharakteristik durch Wahl der Verzögerungen der Echosignale einstellt wird.

Zur Ultraschallabtastung eines Untersuchungsobjektes werden herkömmlicherweise sogenannte Parallel-Scanner eingesetzt. Bei diesen enthält der Ultraschallkopf eine Vielzahl parallel nebeneinander liegender Ultraschallwandler-Elemente, die beim Senden und beim Empfang einzeln oder gruppenweise durchgetastet werden. Beim Empfang entlang einer Abtastzeile kann das Verfahren nach DE-A-26 43 918 eingesetzt werden, d. h. es läßt sich eine elektronische Fokussierung dadurch durchführen, daß mit zunehmender Abtasttiefe im Untersuchungsobjekt eine zunehmende Anzahl an Ultraschallwandler-Elementen aktiviert wird. Die Apertur ist bei diesem Abtastverfahren jedoch verhältnismäßig klein, da immer nur ein einzelnes Element oder eine Gruppe aus der Gesamtzahl aller Ultraschallwandler-Elemente verwendet wird. Daher läßt sich die von der Physik her denkbare maximale Querauflösung nicht erreichen.

Nach einem Verfahren der eingangs genannten Art arbeitet das Ultraschallgerät nach GB-A-2 041 525. Dort wird zusätzlich zur Fokuslage die Richtcharakteristik des Ultraschallkopfes durch Wahl der Verzögerungen der Echosignale geändert. Die Verzögerungen der Empfangskanäle werden so eingestellt, daß die Empfangsrichtung der Senderichtung entspricht. Gleichzeitig wird während des Empfangs der Echosignale die Apertur des Ultraschallkopfes stufenweise durch Aktivierung einer zunehmenden Zahl von Wandlerelementen vergrößert. Dieses Gerät erlaubt einen Sektorscan mit hoher Auflösung des abgetasteten Objekts im Schall-Nah- und im -Fernfeld des Ultraschallkopfes. Da beim elektronischen Sektorscan — im Gegensatz zum elektronischen Parallelscan — die maximale Abtasttiefe immer mit allen Wandlerelementen des Ultraschallkopfes abgetastet wird, ist dort die mit dem Ultraschallkopf maximal erzielbare Querauflösung möglich.

Aufgabe der vorliegenden Erfindung ist es, ein Verfahren der eingangs genannten Art derart auszugestalten, daß sich eine verbesserte Auflösung, insbesondere beim Parallel-Scan, ergibt. Weiterhin soll eine Vorrichtung zur Durchführung des Verfahrens angegeben werden.

Die genannten Aufgabe wird erfindungsgemäß dadurch gelöst, daß die zur Vergrößerung der Apertur aktivierten Wandlerelemente so gewählt werden, daß sich der Schwerpunkt der Apertur, außer bei der Abtastung entlang der zentralen Abtastzeile, mit zunehmender Abtasttiefe entlang den Wandlerelementen verschiebt, die Apertur jeweils bis zu einem alle Wandlerelemente umfassenden, der maximalen Abtasttiefe zugeordneten Endwert vergrößert wird, die Richtcharakteristik so gesteuert wird, daß die Empfangsrichtung die jeweilige Abtastzeile in den den verschiedenen Aperturen entsprechenden Abtasttiefen jeweils unter einem Winkel schneidet, der eine Funktion der Abtastzeile ist, wobei dieser Winkel für die zentrale Abtastzeile zu Null wird, die Auswertung der Echosignale jeweils auf die Signalwerte beschränkt wird, die dem Schnittbereich der jeweiligen Empfangsrichtung mit der jeweiligen Abtastzeile entsprechen.

Die Aperturbewegung wird durch fortlaufendes Zuschalten weiterer Ultraschallwandler-Elemente erzeugt. Und die Richtcharakteristik kann in an sich bekannter Weise (z. B. durch elektronische Mittel) durch die Apertur, die Krümmung und die Belegungsfunktion der aktiven Empfangsfläche eingestellt oder bestimmt werden.

Bei einem solchen Vorgehen ist einem jeden Tiefenpunkt entlang einer Abtastzeile (Bildzeile) eine bestimmte Apertur zugeordnet, die — infolge der schrägen Abtastung — größer ist als die beim herkömmlichen Verfahren. Bekanntlich wird die Auflösung in einem Ultraschallgerät umso größer, je größer die Apertur ist. Dieses Verfahren ermöglicht die volle Nutzung der einem Tiefenbereich zugeordneten Apertur, so daß sich eine verbesserte Auflösung bei der Bilddarstellung ergibt.

Bevorzugt wird dabei so vorgegangen, daß in den einzelnen Aperturstufen die Richtcharakteristik jeweils so eingestellt wird, daß die wirksame Apertur auf die geradlinige Abtastzeile praktisch jeweils unter demselben Winkel « schaut ». Damit ergibt sich über die gesamte Abtasttiefe ein weitgehend konstanter Fokussierungsgrad, d. h. eine konstante F-Zahl.

Die Auflösung ist dabei von der Tiefe unabhängig, d. h. konstant, einstellbar.

Nach einer Weiterbildung der Erfindung ist vorgesehen, daß beim Empfang entlang einer Abtastzeile der Apertur eine Aperturbelegung (« Shading ») zugeordnet ist, die z. B. gemäß einer Gaußschen Verteilungsfunktion oder aber nach einer schiefen, d. h. unsymmetrischen (z. B. gaußähnlichen) Funktion ausgebildet ist.

Diese Aperturbelegung ist dabei ein Maß für eine Wichtung der empfangenen Echosignale. Bei geeigneter Wahl der Aperturbelegung kann ein Ultraschallbild weitgehend ohne Nebenkeulen-Artefakte erzielt werden.

Eine Vorrichtung zur Durchführung des Verfahrens mit einem Ultraschallkopf aus einer Vielzahl von nebeneinander angeordneten Wandlerelementen, einem Sendesignalgenerator zur Versorgung der Wandlerelemente mit Erregersignalen, durch welche die Wandlerelemente zur Aussendung von Ultraschallimpulsen entlang einer Vielzahl von jeweils unterschiedlichen geradlinigen Abtastzeilen angeregt werden, einer Vielzahl von den Wandlerelementen zugeordneten Empfangskanälen, welche jeweils einen Verstärker sowie eine diesem nachgeschaltete steuerbare Verzögerungsschaltung aufweisen, einem Summierglied zur Addition der Ausgangssignale der Empfangskanäle, Signalverarbeitungsschaltungen zur Erzeugung von Bildsignalen aus den Ausgangssignalen des Summerglieds, Steuereinrichtungen zur Steuerung der Richtcharakteristik des Ultraschallkopfes durch Einstellung der Verzögerungszeiten der Verzögerungsschaltungen sowie zur Steuerung der Apertur des Ultraschallkopfes als Funktion der Abtasttiefe entlang einer jeden Abtastzeile zeichnet sich erfindungsgemäß dadurch aus, daß die Verstärker jeweils einen Tiefenausgleichsverstärker enthalten, daß zwischen die Tiefenausgleichsverstärker und die Verzögerungsschaltungen der Empangskanäle Schalter gelegt sind, welche von den Steuereinrichtungen zur Vergrößerung der Apertur des Ultraschallkopfes sukzessive während des Empfangs der Echosignale einer jeden Abtastzeile gemäß einem Programm geschlossen werden, welches eine Verschiebung des Schwerpunkts der Apertur, außer bei der Abtastung entlang der zentralen Abtastzeile, entlang den Wandlerelementen bewirkt, daß die Steuereinrichtungen zur Steuerung der Richtcharakteristik so ausgebildet sind, daß die Empfangsrichtung die jeweilige Abtastzeile in den den verschiedenen Aperturen entsprechenden Abtasttiefen jeweils unter einem Winkel schneidet, der eine Funktion der Abtastzeile ist, wobei dieser Winkel für die zentrale Abtastzeile zu Null wird, und daß die Signalverarbeitungseinrichtungen so ausgebildet sind, daß die Auswertung der Echosignale auf die Signalwerte beschränkt wird, die dem Schnittbereich der jeweiligen Empfangsrichtung mit der jeweiligen Abtastzeile entsprechen.

Ausführungsbeispiele der Erfindung werden im folgenden anhand von vier Figuren näher erläutert. Es zeigen :

Fig. 1 eine schematische Darstellung eines Verfahren zur Ultraschallabtastung mit einem Parallel-Scanner, bei dem bei der Abtastung entlang einer Abtastzeile die Apertur mitläuft,

Fig. 2 einen Ausschnitt aus der Darstellung von Fig. 1,

Fig. 3 eine schematische Darstellung einer Weiterbildung des Verfahrens nach Fig. 1, wobei der mitlaufenden Apertur eine vorgegebene Aperturbelegung zugeordnet ist, und

Fig. 4 eine Vorrichtung zur Durchführung des Verfahrens, das in Figur 3 veranschaulicht ist.

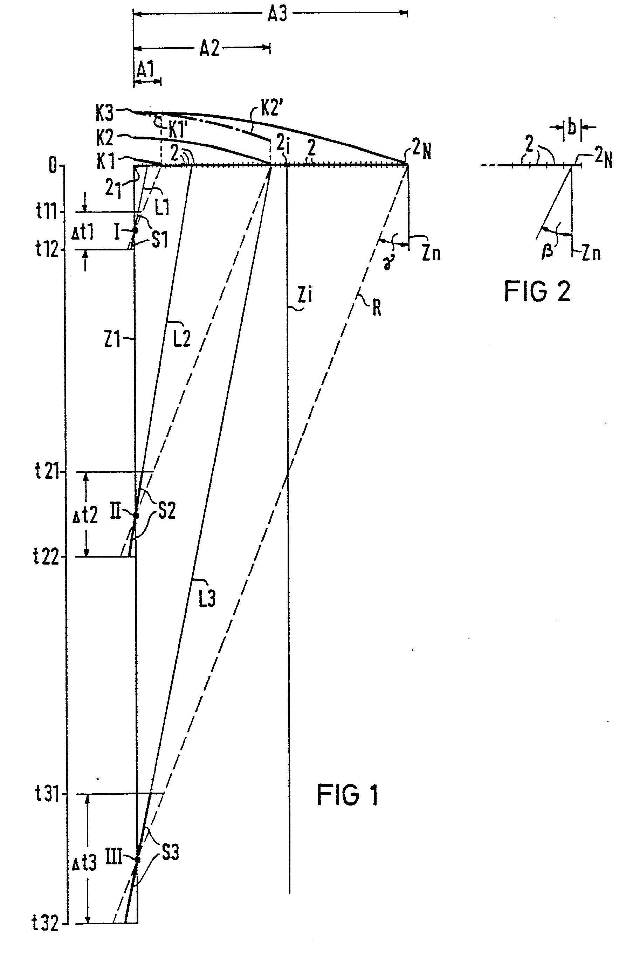

Nach Figur 1 ist zur Ultraschallabtastung eines Objekts ein Ultraschallkopf vorgesehen, der eine Vielzahl N nebeneinander liegender Ultraschallwandler-Elemente 2 aufweist. Beispielsweise können insgesamt $N = 2^7 = 128$ Ultraschallwandler-

Elemente 2 parallel nebeneinander vorgesehen sein. Diese Ultraschallwandler-Elemente 2 sind somit Bestandteil eines linearen Arrays, das beispielsweise 8 cm lang sein kann. Nach Figur 2 kann die Breite eines einzelnen Ultraschallwandler-Elements 2 somit 80 mm/128 = 0,625 mm betragen. Bei einer Ultraschallfrequenz von beispielsweise 3,5 MHz würde dies etwa dem 1 1/2fachen der Wellenlänge entsprechen. Das am linken Ende gelegene Ultraschallwandler-Element des Parallel-Scanners ist mit $2_I$ und das am rechten Ende gelegene Ultraschallwandler-Element ist mit $2_N$ bezeichnet.

Zur Erläuterung des hier verwendeten Empfangsverfahrens wird beispielsweise davon ausgegangen, daß beim vorangehenden Senden eine kleine Apertur, d. h. eine Gruppe mit geringer Anzahl von Ultraschallwandler-Elementen 2, von links beginnend nach rechte durchgeschaltet wird. Links kann dabei ein kleiner Überstand an Wandlerelementen gegenüber der Scan-Breite vorhanden sein. Bei jedem Sendeimpuls ist also nur die vorgegebene Gruppe an Ultraschallwandler-Elementen 2 eingeschaltet, und diese Gruppe wandert nach jedem Sendeimpuls und nach dem Empfang der resultierenden Echosignale um einen Schritt nach rechts. Es sei dabei angenommen, daß zunächst entlang einer ersten Abtastzeile oder Bildzeile Z1 ein Sendeimpuls abgestrahlt wird. Unmittelbar danach werden die aus unterschiedlichen Tiefenbereichen des zu untersuchenden Objekts herrührenden Echosignale mit Hilfe ausgewählter Ultraschallwandler-Elemente 2 nach dem erfindungsgemäßen Verfahren entlang dieser Abtastzeile Z1 empfangen und in einer Signalverarbeitungseinrichtung verarbeitet. Dabei sei weiter angenommen, daß die erste Abtast- oder Bildzeile Z1 identisch ist mit der links gelegenen Randzeile. Sodann wandert die Abtastzeile um einen Schritt nach rechts.

Beim Empfang entlang der Abtastzeile Z1 wird mit wachsender Apertur und mit vorgegebener Empfangs-Richtcharakteristik gearbeitet, und zwar so, daß sich eine zickzack-förmige Abtastkurve ergibt, die die gewünschte geradlinige Abtastzeile Z1 weitgehend approximiert. Dies ist für drei willkürlich herausgegriffene Tiefenbereiche in Figur 1 eingezeichnet. Die drei Tiefenbereiche sind mit Δt1, Δt2 und Δt3 bezeichnet. Im Gegensatz zur Darstellung in Figur 1 sind diese Tiefenbereiche Δt1, Δt2 und Δt3 in Wirklichkeit im Verhältnis zum gesamt abgetasteten Tiefenbereich wesentlich kleiner, da es ja darauf ankommt, die jeweils im zentralen Teil gelegenen Objektpunkte I, II und III möglichst gut zu erfassen. Bei der Abtastung während des Empfangs werden sich auch in Wirklichkeit die einzelnen abgetasteten Tiefenbereiche — im Gegensatz zur Darstellung — unmittelbar aneinanderreihen. In Figur 1 ist jedoch der besseren Übersichtlichkeit wegen eine getrennte Darstellung gewählt.

Zu Beginn der Empfangsabtastung entlang der Abtastzeile Z1 wird mit kleiner Apertur gearbeitet. Dies ist durch die Apertur A1 am linken Rand des Ultraschallkopfes dargestellt. Die Apertur A1 schließt dabei das linke Rand-Element $2_l$ ein. Wie ersichtlich, sind also in der Apertur A1 nur relativ wenige Elemente 2 aktiviert. Die elektrische Fokussierung des Ultraschallgeräts ist durch bekannte elektronische Mittel entsprechend der Krümmung K1 eingestellt. Die Krümmung K1 ist dabei ein Teil eines Kreises um den Objektpunkt I als Mittelpunkt. Der Abstand jedes einzelnen Ultraschallwandler-Elements $2_i$ (i = 1 ... N) von dem Krümmungsabschnitt K1 entspricht dabei jeweils der eingestellten Verzögerungszeit dieses Elements $2_i$. Es ist bemerkenswert, daß zur Abtastung der links gelegenen Randzeile Z1 das erste Ultraschallwandler-Element $2_l$ beim Empfang die größte Verzögerung erfährt, während die weiter rechts gelegenen Elemente mit zunehmendem Abstand vom Randelement $2_l$ eine immer weniger starke Verzögerung ihres Empfangssignals bei der Summierung erfahren. Auf diese Weise wird erreicht, daß der Ultraschallkopf auf das Objekt I fokussiert ist.

Mit dem Empfang mit der vorgegebenen Krümmung K1 wird begonnen, wenn Echosignale aus der vorgegebenen Tiefe t11 eintreffen, und der Empfang wird abgebrochen, wenn Echosignale aus der vorgegebenen Tiefe t12 eingetroffen sind. Hierbei bleibt der Ultraschallkopf auf den Objektpunkt I fokussiert. Dies wird — in an sich bekannter Weise — durch Vorgabe einer entsprechenden Richtcharakteristik erreicht. Während der Einschaltdauer wird somit nicht in Richtung der Abtastzeile Z1, sondern schräg dazu entlang der Linie L1 empfangen. Der während der Einschaltzeit abgetastete Bereich ist durch die schräge Strecke S1 gegeben, die durchgezogen eingezeichnet ist.

Die Empfangsabtastung wird sodann mit dem an den Bereich Δt1 anschließenden Tiefenbereich fortgesetzt. Der Übersichtlichkeit wegen ist in Figur 1 der weiter entfernte Tiefenbereich Δt2 eingezeichnet. Diesem Tiefenbereich Δt2 entspricht nunmehr eine vergrößerte Apertur A2, also eine größere Anzahl oder Gruppe gleichzeitig aktivierter Ultraschallwandler-Elemente, wobei wieder das linke Randelement $2_l$ eingeschlossen ist. Man kann sagen, daß der Schwerpunkt der aktiven Apertur in Scan-Richtung, also nach rechts, über die Ultraschallwandler-Elemente 2 gewandert ist. Der vergrößerten Apertur A2 wiederum entspricht eine andere Einstellung der Zeitverzögerung der von den aktivierten Ultraschall-Elementen aufgenommenen und sodann summierten Ultraschall-Echosignale. Dies ist durch die Krümmung K2 angedeutet. Auch hier erfährt das links gelegene Randelement $2_l$ die größte Zeitverzögerung, während die weiter rechts gelegenen Ultraschall-Elemente 2 der nunmehr eingeschalteten Gruppe eine umso geringere Zeitverzögerung erfahren, je weiter sie rechts liegen. Die Apertur A2 ist so gewählt, daß das Ultraschall-Array auf den tiefer gelegenen Objektpunkt II fokussiert ist. Entsprechend zuvor wird diese Apertur A2 aktiviert, sobald Echosignale aus einer vorgegebenen Tiefe t21 ankommen. Der Empfang mit dieser Apertur A2 wird abgebrochen, sobald Echosignale aus einer vorgegebenen größeren Tiefe t22 auf die aktivierten Ultraschallwandler-Elemente 2 auftreffen. Während der Aktivierungszeit wird also hier — infolge der gewählten Richtcharakteristik — eine Abtastung entlang der schrägen Linie L2 durchgeführt, und zwar nur entlang der Strecke S2, die den interessierenden Objektpunkt II einschließt. Auch hier wieder wird die Abtastung so vorgenommen, daß anstelle der Abtastung entlang der Abtastzeile Z1 eine Abtastung schräg dazu, und zwar zwischen den Tiefen t21 und t22 entlang der Strecke S2, erfolgt.

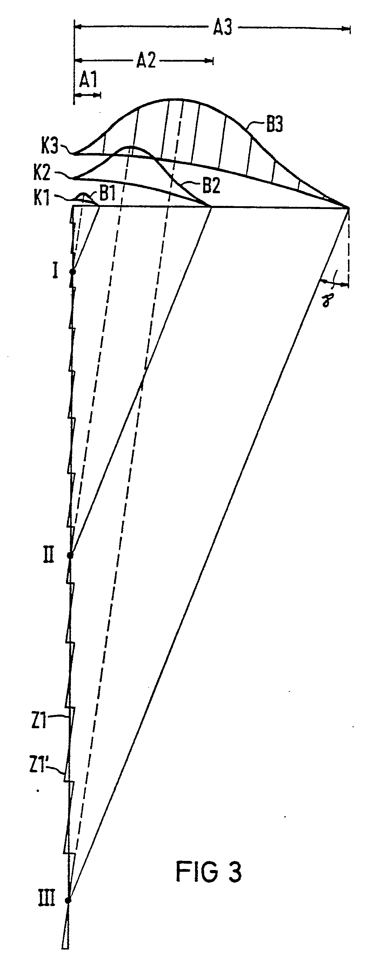

Diese schrittweise und schräge Abtastung setzt sich nun lückenlos entlang der Abtastzeile Z1 fort, und zwar so, daß sich eine zick-zack-förmige Abtastkurve ergibt. Diese ist in Figur 3 gezeigt.

In Figur 1 ist noch eingezeichnet, wie die Empfangsabtastung des in der größten Tiefe gelegenen Objektpunktes III erfolgt. Zur Abtastung dieses Objektpunktes III sind sämtliche Ultraschallwandler-Elemente $2_l$, ... $2_i$ ... $2_N$ aktiviert. Die Apertur ist in diesem Fall mit A3 bezeichnet. Zur Fokussierung auf den Objektpunkt III werden die von den einzelnen aktivierten Elementen $2_l$, ... $2_i$ ... $2_N$ empfangenen Ultraschall-Echosignale entsprechend einem Kreissegment mit der Krümmung K3 zeitlich verzögert. Die Fokussierung erfolgt dann entlang einer schrägen Linie L3, von der für die Signalauswertung tatsächlich nur die Strecke S3 herangezogen wird, die den Objektpunkt III einschließt.

Es ist hervorzuheben, daß jede gerade wirksame Apertur A1, A2, A3 auf die geradlinige Abtastzeile Z1 etwa unter demselben Winkel « schaut ».

Das Ergebnis des in Figur 1 dargestellten Abtastverfahrens ist eine tiefenunabhängige konstante Auflösung. Dabei ist festzuhalten, daß die Abtastzeile Z1 durch einen Zick-Zack-Zug approximiert wird, der sich durch das Mitlaufen der Apertur A sowie der Krümmung K ergibt.

In gleicher Weise wird bei der parallel rechts daneben liegenden zweiten Abtastzeile Z2 (nicht eingezeichnet) vorgegangen. Nach dem Senden erfolgt auch hier wieder eine zick-zack-förmige Approximierung der Abtastzeile Z2. Entsprechend wird ganz allgemein bei der Abtastung der Abtastzeile $Z_i$ (i = 1 ... N) vorgegangen.

Werden die einzelnen Tiefenbereiche Δt ausreichend klein gewählt, was eine Frage der Dimensionierung des Ultraschallkopfes sowohl in mechanischer als auch in elektrischer Hinsicht ist, so ergibt sich der Vorteil, daß in jeder einzelnen Abtast- oder Bildzeile $Z_i$ (i = 1 bis N) die maximal mögliche Apertur A benutzt wird. Das führt dazu, daß ein Ultraschall-Bild mit hoher Auflösung erhalten wird.

Nach Figur 1 läßt sich anstelle des Satzes der Krümmungen K1, K2, K3 ein Krümmungssatz K1', K2', K3 verwenden, deren Kurven alle am linken Startpunkt der Krümmung K3 zusammenlaufen. Die Krümmungen K1' und K2' sind dabei strichpunktiert gezeichnet. Für andere Abtastzeilen als Z1 wird der gemeinsame Startpunkt der Krümmungen ebenfalls am Ort der Abtastzeile auf dem Array liegen. Der Krümmungssatz K1', K2', K3 hat den Vorteil, daß der apparative Aufwand für die Verzögerungsglieder und die Umwandlung der Laufzeitmessung in die Koordinatendarstellung geringer wird.

In Figur 1 ist für die linke Abtast- oder Bildzeile $Z_1$ der Randstrahl R für die Abtastung des Objektpunktes III eingetragen. Dieser ist bezüglich der rechten Randzeile $Z_n$ um einen Winkel $\gamma$ geneigt Berechnungen haben ergeben, daß dieser Winkel $\gamma$ bei der zuvor erwähnten Dimensionierung des Ultraschallkopfes 22° betragen kann.

In Figur 2 werden einige Überlegungen zur Breite der einzelnen Ultraschallwandler-Elemente $2_i, ...2_i ... 2_N$ verdeutlicht. Betrachtet man ein einzelnes Element 2, beispielsweise das rechte Randelement $2_N$, so ist bekannt, daß dessen Breite b zur Unterdrückung der « grating lobes » klein sein muß. Am günstigsten ist ein Wert von $\lambda/2$ ($\lambda$ ist die Wellenlänge). Es hat sich jedoch gezeigt, daß ein Wert von $b = 1.5 \lambda$ für einen Parallel-Scan (mit einem verhältnismäßig geringen Schwenk) ausreicht. Weiterhin ist zu beachten, daß die Eigenrichtwirkung des einzelnen Ultraschallwandler-Elements $2_N$ so weit unterdrückt sein sollte, daß es in der Lage ist, schräg einfallende Ultraschall-Strahlung zu empfangen. Überlegungen haben gezeigt, daß bei den voranstehend angegebenen Dimensionierungen (wird ein Sägeverlust berücksichtigt, so ergibt sich eine Breite von 0,45 mm, was etwa einer ganzen Wellenlänge entspricht) ein Intensitätsabfall von etwa 3 dB bei einem Winkel $\beta = 27°$ zu verzeichnen ist. Mit anderen Worten, soll bei dem in Figur 1 eingetragenen Winkel $\gamma$, der — wie erwähnt — 22° betragen kann, der Intensitätsabfall des Randelements $2_N$ nicht mehr als 3 dB betragen, dann ist dies gewährleistet, wenn dieses eine Breite von etwa $1,0 \lambda$ bei 3,5 MHz besitzt. Bei 4 MHz wird ein Intensitätsabfall von 3 dB bei einer Elementbreite $b = 0,4$ mm erreicht.

In der Mittenzeile, d. h. für eine Abtastzeile am Ort des Elements $2_{N/2}$, ergibt sich eine symmetrische Antenne ohne zick-zack-förmigen Kurvenverlauf.

In Figur 3 sind gleiche und gleichwirkende Darstellungselemente mit denselben Bezugszeichen versehen wie in Figur 1. Hier ist im einzelnen die zick-zack-förmige Approximation der geradlinigen Abtastkurve $Z_1$ eingezeichnet und mit $Z_1'$ bezeichnet. Die darzustellende Bildzeile $Z_i$ (i = 1 ... N) wandert auch hier nach jedem Sendeimpuls in Scan-Richtung um einen Schritt weiter, also nach rechts.

Bemerkenswert ist in Figur 3, daß die jeder Apertur A1, A2 und A3 zugeordnete Krümmung K1, K2 bzw. K3 mit einer Aperturbelegung B1, B2 bzw. B3 versehen ist. Eine solche Aperturbelegung, die im fachlichen Sprachgebrauch auch manchmal als « Shading » oder « Apodizing » bezeichnet wird, führt dazu, daß bei der Abtastung eines Objektpunktes I, II bzw. III die von den aktivierten Ultraschall-Elementen 2 empfangenen Echosignale unterschiedlich gewichtet aufaddiert werden. Die Wichtung und damit die Form der Aperturbelegung B1, B2 bzw. B3 richtet sich nach den praktischen Bedürfnissen. Wie dargestellt, kann dabei vorteilhafterweise jeweils eine Funktion gewählt werden, die an den beiden Seiten einen langsamen, quasi-stetigen Übergang aufweist. Die Verwendung dieser Aperturbelegung B1, B2 bzw. B3 führt zu einer Unterdrückung der Nebenkeulen, die durch Randeffekte bei rechteckiger Belegungsfunktion entstehen würden.

Besonders hervorzuheben ist bei den in Figur 3 gezeigten Aperturbelegungen B1, B2 und B3 für die linke Randzeile $Z_1$, daß diese Funktionen so gewählt sind, daß sich ein unsymmetrisches « Shading » ergibt. Mit anderen Worten, der Schwerpunkt der Empfindlichkeitskeule liegt nicht jeweils in der Mitte der Krümmungen K1, K2 bzw. K3, sondern ist hier nach links verschoben. Damit kann erreicht werden, daß die Zahl der Umschaltungen beim Abtasten kleiner wird als beim symmetrischen « Shading ». Anderen Bildzeilen $Z_i$ können andere Aperturbelegungen zugeordnet sein.

Der Aperturmitlauf hat zur Folge, daß in der maximalen Abtasttiefe alle vorhandenen n = 128 Ultraschallwandler-Elemente 2 immer gleichzeitig abgefragt werden und damit immer im Einsatz sind. (Der Aperturmitlauf von Figur 1 kann im übrigen auch als rechteckförmige variable Aperturbelegung aufgefaßt werden.) Durch die unterschiedliche Aperturbelegung werden die Beiträge der einzelnen Ultraschallwandler-Elemente 2 unterschiedlich gewichtet. So werden die Signalbeiträge bei den Aperturen A1 und A2 derjenigen Elemente, die jeweils rechts der Apertur liegen, nicht berücksichtigt. Dies kann als eine Wirkung des Aperturmitlauf oder aber der Aperturbelegung aufgefaßt werden.

Bei der in Figur 3 dargestellten Ausführungsform wird somit die Abtastzeile $Z_1$ approximiert durch eine zickzack-förmige Abtastkurve $Z_1'$, und zwar durch Mitlaufen der Apertur A, der Krümmung K und der Aperturbelegung B. Entsprechendes gilt für die anderen Abtastzeilen $Z_i$ (i = 1 ... N).

Es soll nochmals erwähnt werden, daß bei der Abtastung der linken Randzeile $Z_1$ ein kleiner (nicht gezeigter) Überstand an Ultraschallwandler-Elementen 2 am linken Rand vorhanden sein kann. Dies ist u. U. notwendig, um im Sendefall senkrecht abstrahlen zu können bei einer Apertur, die größer ist als die Breite eines einzelnen Ultraschallwandler-Elements.

Bei konventioneller Technik mit einem linearen Array würde man bei derselben Bildfeldbreite und bei gleicher Apertur ein doppelt so langes Array benötigen als im Ausführungsbeispiel der Figuren 1 und 3 ; beidseitig würde man nämlich ein halbes Array als Überstand benötigen.

Es soll noch darauf hingewiesen werden, daß das Ultraschall-Array auch als Mehrzeilen-Array oder als flächenhaftes Array mit einer Matrix aus Ultraschallwandler-Elementen ausgeführt sein kann. Dann ergibt sich die Möglichkeit, auch eine Fokussierung quer zur Scan-Richtung durchzuführen.

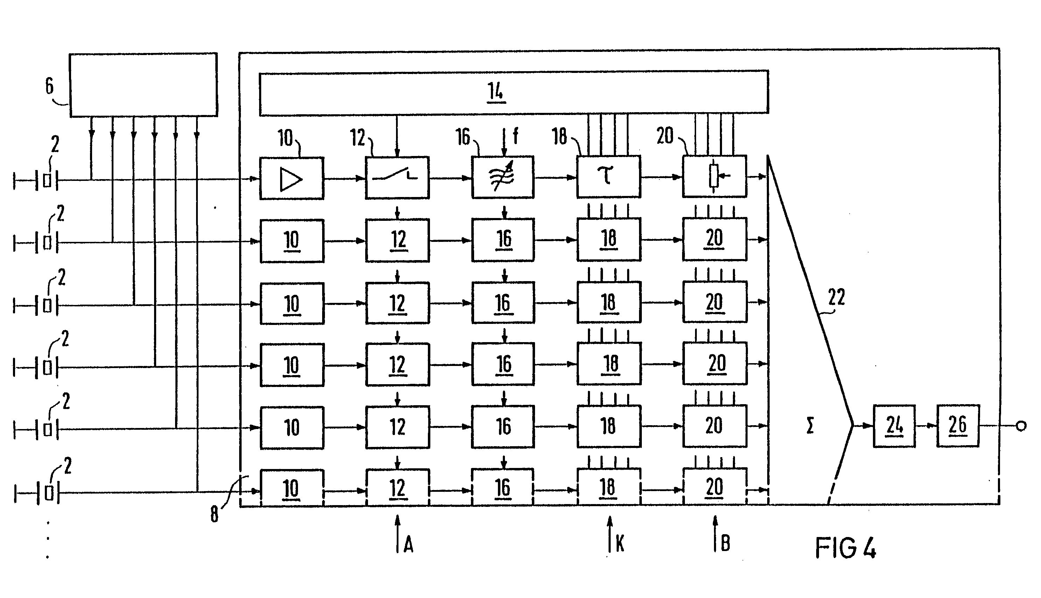

In Figur 4 ist schematisch ein Ausführungsbeispiel einer Vorrichtung zur Durchführung des in Figur 3 beschriebenen Verfahrens dargestellt. Bei dieser Vorrichtung sind wieder beispielsweise N = 128 Ultraschallwandler-Elemente 2 vorgesehen. In konventioneller Weise werden diese im Sendefall von einem Sender 6 mit Sendesignalen beaufschlagt. Zwischen dem Sender 6 und einem ebenfalls an die Ultraschallwandler-Elemente 2 angeschlossenen Empfänger 8 sind (nicht gezeigte) konventionelle Entkoppelglieder eingeschaltet.

Das von einem jeden Ultraschallwandler-Element 2 aufgenommene Ultraschall-Echosignal wird einem eigenen TGC oder Tiefenausgleichsverstärker 10 zugeleitet. Die einzelnen Tiefenausgleichsverstärker 10 sorgen dafür, daß bei gleicher Reflexion das Echosignal aus einer größeren Tiefe dieselbe Amplitude erhält wie ein Signal aus einer geringeren Tiefe. Somit wird eine Art Pegelnormierung durchgeführt. Gleichzeitig wird eine Art Dynamikeinengung erreicht. Es hat sich nämlich gezeigt, daß ein Dynamikbereich von 50 dB für die aufgenommenen Echosignale im Hinblick auf die nachfolgenden Bauelemente ausreicht.

Bei den N = 128 Tiefenausgleichsverstärkern 10 ist darauf zu achten, daß diese im Gleichlauf arbeiten. Dies kann beispielsweise dadurch erreicht werden, daß man entsprechend aufgebaute ICs aus derselben HerstellungsCharge verwendet. Weiterhin ist es möglich, alle Tiefenausgleichsverstärker 10 vor oder beim Gebrauch abzustimmen auf dieselbe Empfindlichkeit, was automatisch geschehen kann.

Jedes der aus den Tiefenausgleichsverstärkern 10 abgeleiteten Ausgangssignale wird einer eigenen Schalteinrichtung 12 zugeführt. Jede dieser Schalteinrichtungen 12 ist im wesentlichen ein Schalter, der unter der Kontrolle einer Steuereinrichtung, bevorzugt eines Mikroprozessors 14, steht. Die Schaltstellung der Schalteinrichtungen 12 legt jeweils die gewählte Apertur fest.

Die von den Schalteinrichtungen 12 durchgelassenen Ausgangssignale werden jeweils einstellbaren Bauelementen 16 und 18 zugeführt, die ebenfalls vom Mikroprozessor 14 kontrolliert werden. Diese Bauelemente 16, 18 sind dazu da, die jeweils benötigte Krümmung K zu realisieren. Es kann sich bei den Bauelementen 18 insbesondere um einstellbare Verzögerungsglieder handeln, die zwecks Fokussierung in jeder Bildzeile $Z_i$ für die Einstellung der Krümmung K sorgen. Es hat sich gezeigt, daß Verzögerungszeiten von 10 μs nur mit einigem Aufwand realisierbar sind. Um hier dennoch zu einem vertretbaren Aufwand zu gelangen, können an sich bekannte Mischtechniken eingesetzt werden. Die Bauelemente 16 können also Mischglieder sein, die eine Frequenz f beimischen. Beispielsweise läßt sich durch eine solche Mischtechnik das interessierende Frequenzband von z. B. 2 bis 5 MHz auf ein Frequenzband von 0 bis 3 MHz bzw. bei Quadraturtechnik auf zwei Kanälen mit 0 bis 1,5 MHz nach unten verschieben. Die Bauelemente 16, 18 können auch so ausgestaltet sein, daß sie eine Hochmischung auf höhere Frequenzen bewirken, beispielsweise auf einen Bereich um 30 MHz, und daß dann zusätzlich Oberflächen-Akustik-Glieder eingesetzt werden, die die Einstellung von Verzögerungen gestatten.

Die aus den Baugliedern 18 abgegebenen Ausgangssignale werden jeweils einem Belegungs-Bauglied 20 zugeleitet, die ebenfalls unter der Kontrolle des Mikroprozessors 14 stehen. Bei diesen Belegungs-Baugliedern 20 handelt es sich um solche, die für die jeweilige Aperturbelegung sorgen. Im Prinzip kann es sich bei den Belegungs-Baugliedern 20 um veränderliche Widerstände handeln, deren Widerstandswert von dem Mikroprozessor 14 nach Maßgabe einer für die jeweilige Apertur vorgegebenen Belegung B geändert wird. Mit anderen Worten, die Belegungs-Bauglieder 20 erzeugen die Empfindlichkeitsbelegung oder das « Shading », und sie blenden auch z. B. die in den Figuren 1 und 3 bei den Belegungen B1 und B2 nicht gewünschten (rechts gelegenen) Ultraschall-Elemente aus. Dann können die Schalter 12 entfallen.

Die einzelnen in dieser Weise verarbeiteten Echosignale werden von den einzelnen Belegungs-Baugliedern 20 an eine Summiereinrichtung 22 gegeben und dort aufaddiert oder überlagert. Die im Summierglied 22 überlagerten Signale werden sodann in bekannter Weise einem Demodulator und anschießend einem Analog-Digital-Wandler 26 zugeleitet. Die weitere Verarbeitung erfolgt dann in konventioneller Weise so, daß ein Bildsignal erzeugt wird, welches auf ein Bilddarstellungs- oder Bildaufzeichnungsgerät gegeben wird.

Abweichend von der Darstellung kann das Ausgangssignal des Summiergliedes 22 auch zunächst als Hochfrequenz-Signal auf einen Analog-Digital-Wandler gegeben werden, woraus dann ein gleichgerichtetes Signal gewonnen wird, welches in einem digitalen Tiefpaßfilter weiterverarbeitet wird. Auch diese Art der Signalverarbeitung ist an sich bekannt. Hier ergibt sich der Vorteil, daß eine größere Dynamik erzielbar ist.

Das beschriebene Verfahren läßt sich nicht nur für den Parallel-Scan, sondern auch für die Realisierung eines Trapez-Scans einsetzen. In den beiden Randbereichen des Trapezes lassen sich jeweils die geradlinigen Abtastzeilen mit vergleichsweise kleiner Anzahl von Zick-Zack-Schritten approximieren.

Die Maßnahmen nach dem beschriebenen Verfahren lassen sich für eine besonders bevorzugte Ausführung unter Abgrenzung gegenüber bisher praktizierten Verfahren wie folgt zusammenfassen : Die ganze Länge des Arrays wird zur « aktiven Apertur », und der bekannte Scan, d. h. die Verschiebung zum Zwecke der Abtastung, wird hier durch eine Kombination von Schwenk und Verschiebung der Schwerpunktslinie des Schallfeldes oder der Empfangs-Richtungscharakteristik ersetzt. Ein Aperturmitlauf sorgt für eine tiefenunabhängige Auflösung, d. h. eine konstante F-Zahl, und eine — bevorzugt unsymmetrische-Aperturbelegung unterdrückt störende Nebenkeulen. Auf diese Weise läßt sich bei einem Array-B-Scanner die Ortsauflösung steigern. Gleichzeitig wird die Abhängigkeit der Ortsauflösung von der Tiefenkoordinate vermindert.

## Patentansprüche

1. Verfahren zur Ultraschallabtastung eines Objekts, bei dem

mittels eines aus einer Vielzahl von nebeneinander angeordneten Wandlerelementen (2) bestehenden Ultraschallkopfes Ultraschallimpulse jeweils entlang unterschiedlicher geradliniger Abtastzeilen (Z1, Zi, Zn) in das Objekt gesendet werden ;

die Echosignale als Funktion der Abtasttiefe in jeweils auf einen Ultraschallimpuls folgenden Empfangsperioden erfaßt werden ;

während jeder Empfangsperiode die Apertur (A1, A2, A3) des Ultraschallkopfes ausgehend von einem Anfangswert (A1) als Funktion der Abtasttiefe stufenweise durch Aktivierung einer zunehmenden Zahl von Wandlerelementen vergrößert wird ;

die Richtcharakteristik (L1, L2, L3) des Ultraschallkopfes (A1, A2, A3) durch Wahl der Verzögerungen der Echosignale eingestellt wird, dadurch gekennzeichnet, daß

die zur Vergrößerung der Apertur aktivierten Wandlerelemente so gewählt werden, daß sich der Schwerpunkt der Apertur, außer bei der Abtastung entlang der zentralen Abtastzeile, mit zunehmender Abtasttiefe entlang den Wandlerelementen verschiebt ;

die Apertur jeweils bis zu einem alle Wandlerelemente umfassenden, der maximalen Abtasttiefe zugeordneten Endwert vergrößert wird ;

die Richtcharakteristik (L1, L2, L3) so gesteuert wird, daß die Empfangsrichtung die jeweilige Abtastzeile in den den verschiedenen Aperturen entsprechenden Abtasttiefen jeweils unter einem Winkel schneidet, der eine Funktion der Abtastzeile ist, wobei dieser Winkel für die zentrale Abtastzeile zu Null wird,

die Auswertung der Echosignale jeweils auf die Signalwerte (S1, S2, S3) beschränkt wird, die dem Schnittbereich der jeweiligen Empfangsrichtung (L1, L2, L3) mit der jeweiligen Abtastzeile (Z1, Zi, Zn) entsprechen.

2. Verfahren nach Anspruch 1, dadurch gekennzeichnet daß beim Empfang entlang einer Abtastzeile (Zi) die elektronische Fokussierung der aktiven Wandlerelemente jeweils mit der Apertur geändert wird, wobei jedem Fokus eine Aperturbelegung (B1, B2, B3) zugeordnet wird, die ein Maß für die Wichtung der von den aktivierten Ultraschall-Elementen (2) empfangenen Echosignale ist.

3. Verfahren nach Anspruch 2, dadurch gekennzeichnet, daß bei Abtastung einer Abtastzeile (Zi), die außerhalb der zentralen Abtastzeile liegt, die Aperturbelegung (B1, B2, B3) unsymmetrisch ist.

4. Verfahren nach Anspruch 3, dadurch gekennzeichnet, daß die Aperturbelegung (B1, B2, B3) eine annähernd stetige Funktion ist.

5. Verfahren nach einem der Ansprüche 1 bis 4, dadurch gekennzeichnet, daß beim Parallel-Scan in dem tiefsten Tiefenbereich die Apertur (A3) so eingestellt ist, daß der Randstrahl (R) nicht mehr als 25° abweichend von der Normalrichtung des Ultraschallkopfes liegt.

6. Vorrichtung zur Durchführung des Verfahrens nach Anspruch 1 mit

einem Ultraschallkopf aus einer Vielzahl von nebeneinander angeordneten Wandlerelementen (2),

einem Sendesignalgenerator (6) zur Versorgung der Wandlerelemente (2) mit Erregersignalen, durch welche die Wandlerelemente (2) zur Aussendung von Ultraschallimpulsen entlang einer Vielzahl von jeweils unterschiedlichen geradlinigen Abtastzeilen (Z1, Zi, Zn) angeregt werden,

einer Vielzahl von den Wandlerelementen zugeordneten Empfangskanälen, welche jeweils einen Verstärker (10) sowie eine diesem nachgeschaltete steuerbare Verzögerungsschaltung (16, 18) aufweisen,

einem Summierglied (22) zur Addition der Ausgangssignale der Empfangskanäle,

Signalverarbeitungsschaltungen (24, 26) zur Erzeugung von Bildsignalen aus den Ausgangssignalen des Summierglieds,

Steuereinrichtungen (14) zur Steuerung der Richtcharakteristik des Ultraschallkopfes durch Einstellung der Verzögerungszeiten der Verzögerungsschaltungen sowie zur Steuerung der Apertur des Ultraschallkopfes als Funktion der Abtasttiefe entlang einer jeden Abtastzeile, dadurch gekennzeichnet, daß

die Verstärker jeweils einen Tiefenausgleichsverstärker (10) enthalten,

zwischen die Tiefenausgleichsverstärker (10) und die Verzögerungsschaltungen (16, 18) der Empfangskanäle Schalter (12) gelegt sind, welche von den Steuereinrichtungen zur Vergrößerung der Apertur des Ultraschallkopfes sukzessive während des Empfangs der Echosignale einer jeden Abtastzeile gemäß einem Programm geschlossen werden, welches eine Verschiebung des Schwerpunkts der Apertur außer bei der Abtastung entlang der zentralen Abtastzeile entlang den Wandlerelementen bewirkt,

die Steuereinrichtungen zur Steuerung der Richtcharakteristik so ausgebildet sind, daß die Empfangsrichtung die jeweilige Abtastzeile in den den verschiedenen Aperturen entsprechenden Abtasttiefen jeweils unter einem Winkel schneidet, der eine Funktion der Abtastzeile ist und für die zentrale Abtastzeile zu Null wird,

die Signalverarbeitungseinrichtungen so ausgebildet sind, daß die Auswertung der Echosignale auf die Signalwerte beschränkt wird, die dem Schnittbereich der jeweiligen Empfangsrichtung mit der jeweiligen Abtastzeile entsprechen.

7. Vorrichtung nach Anspruch 6, dadurch gekennzeichnet, daß zwischen jedem Bauelement (16, 18) zur Signalverzögerung und dem Summierglied (22) jeweils ein Belegungs-Einstellglied (20) zwischengeschaltet ist, das unter Kontrolle der Steuereinrichtung (14) für jede Apertur (A) eine zugehörige Aperturbelegung (B) einstellt.

8. Vorrichtung nach Anspruch 6 oder 7, dadurch gekennzeichnet, daß jedes Bauelement (16, 18) zur Signalverzögerung nach dem Prinzip der Frequenzmischung arbeitet.

9. Vorrichtung nach einem der Ansprüche 6 bis 8, dadurch gekennzeichnet, daß die Steuereinrichtung (14) ein Mikroprozessor ist.

## Claims

1. Method for ultrasonic scanning of an object in which

by means of an ultrasonic head consisting of a plurality of transducer elements (2) arranged next to each other, ultrasonic pulses are transmitted along different respective linear scanning lines (Z1, Zi, Zn) into the object;

the echo signals are measured as a function of the scanning depth in reception periods following a respective ultrasonic pulse;

during each reception period the aperture (A1, A2, A3) of the ultrasonic head is enlarged, as a function of the scanning depth gradually through activation of an increasing number of transducer elements starting from an initial value (A1);

the directional characteristic (L1, L2, L3) of the ultrasonic head (A1, A2, A3) is adjusted by the choice of the time delays of the echo signals, characterised in that

activated transducer elements for enlarging the aperture are chosen so that the centre of gravity of the aperture, except when scanning along the central scanning line, is displaced with increasing scanning depth, along the transducer elements;

the aperture is enlarged in each case to a terminal value, assigned to the maximum scanning depth and encompassing all transducer elements;

the directional characteristic (L1, L2, L3) is controlled in such a way that the receiving direction cuts, in each case, at an angle, the respective scanning line in the scanning depths corresponding to the different apertures, which angle is a function of the scanning line, whereby this angle becomes nil for the central scanning line,

the evaluation of the echo signals is restricted in each case to the signal values (S1, S2, S3) which correspond to the cutting region of the respective receiving direction (L1, L2, L3) with the respective scanning line (Z1, Zi, Zn).

2. Method according to claim 1, characterised in that during reception along a scanning line (Zi) the electronic focussing of the active transducer elements is altered with the respective aperture, whereby an aperture occupancy (B1, B2, B3) is assigned to each focal spot, which is a measure for the weighting of the echo signals received by the activated ultrasonic elements (2).

3. Method according to claim 2, characterised in that when scanning a scanning line (Zi), which lies outside the central scanning line, the aperture occupancy (B1, B2, B3) is asymmetrical.

4. Method according to claim 3, characterised in that the aperture occupancy (B1, B2, B3) is an approximately constant function.

5. Method according to one of claims 1 to 4, characterised in that during a parallel scanning in the deepest depth of field, the aperture (A3) is adjusted such that the edge ray (R) no longer lies more than 25° deflection from the normal direction of the ultrasonic head.

6. Device for carrying out the method according to claim 1 with

an ultrasonic head formed of a plurality of transducer elements arranged next to each other (2),

a transmission signal generator (6) for providing the transducer elements (2) with exciter signals, by means of which the transducer elements (2) are excited for emitting ultrasonic pulses along a plurality of different respective linear scanning lines (Z1, Zi, Zn),

a plurality of reception channels allocated to the transducer elements which have in each case an amplifier (10) as well as a controllable time-delay circuit (16, 18), connected thereafter,

with a summing element (22) for adding the output signals from the reception channels,

with signal processing circuits (24, 26) for generating picture signals from the output signals of the summing element,

with control devices (14) for controlling the directional characteristic of the ultrasonic head by adjusting the delay times of the time-delay circuits as well as for controlling the aperture of the ultrasonic head as function of the scanning depth along each of the scanning lines, characterised in that

the amplifiers contain in each case a depth compensating amplifier (10),

between the depth compensating amplifier (10) and the time-delay circuits (16, 18) for the reception channels switches are connected which are closed successively by the control devices for enlarging the aperture of the ultrasonic head during the reception of the echo signals of each scanning line, [this being done] according to a program which effects a displacement of the centre of gravity of the aperture except when scanning along the central scanning line along the transducer elements,

the control devices for controlling the directional characteristic are constructed such that the reception direction cuts, in each case at an angle, the respective scanning line in the scanning depths corresponding to the different apertures, which angle is a function of the scanning line and becomes nil for the central scanning line,

the signal processing devices are constructed such that the evaluation of the echo signals is restricted to the signal values, which correspond to the intersection region of the respective reception direction with the respective scanning line.

7. Device according to claim 6, characterised in that interconnected between each component (16, 18) for signal delay and the summing element (22) there is in each case an occupancy-adjusting member (20) which, under the control of the control device (14), adjusts for each aperture (A) a respective aperture occupancy (B).

8. Device according to claim 6 or 7, characterised in that each component works for signal delay according to the principle of the frequency mixture.

9. Device according to one of claims 6 to 8, characterised in that the control device (14) is a micro-processor.

**Revendications**

1. Procédé d'exploration par ultrasons d'un objet, selon lequel

des impulsions ultrasonores sont émises dans l'objet, respectivement le long de différentes lignes d'exploration rectilignes (Z1, Zi, Zn), au moyen d'une tête ultrasonore, constituée par une multiplicité d'éléments transducteurs (2) disposés côte-à-côte ;

les signaux sont détectés en fonction de la profondeur d'exploration, pendant des périodes de réception succédant respectivement à une impulsion ultrasonore ;

pendant chaque période de réception, l'ouverture (A1, A2, A3) de la tête ultrasonore est accrue par échelons, à partir d'une valeur initiale (A1), en fonction de la profondeur d'exploration, par activation d'un nombre croissant d'éléments transducteurs ;

la caractéristique directionnelle (L1, L2, L3) de la tête ultrasonore (A1, A2, A3) est réglée grâce au choix des retards des signaux d'échos, caractérisé par le fait que

on choisit les éléments transducteurs activés pour accroître l'ouverture, de manière, qu'à l'exception du cas de l'exploration le long de la ligne centrale d'exploration, le centre de gravité de l'ouverture se déplace avec une profondeur croissante d'exploration le long des éléments transducteurs ;

on augmente l'ouverture respectivement jusqu'à une valeur finale englobant tous les éléments transducteurs et associée à la profondeur maximale d'exploration ;

on commande la caractéristique directionnelle (L1, L2, L3) de manière que la direction de réception recoupe la ligne respective d'exploration, aux profondeurs d'exploration correspondant aux différentes ouvertures, respectivement sous un angle qui est fonction de la ligne d'exploration, cet angle s'annulant pour la ligne centrale d'exploration,

l'évaluation des signaux d'échos est limitée respectivement aux valeurs de signaux (S1, S2, S3), qui correspondent à la zone d'intersection de la direction respective de réception (L1, L2, L3) avec la ligne respective d'exploration (Z1, Zi, Zn).

2. Procédé suivant la revendication 1, caractérisé par le fait que, lors de la réception d'une ligne d'exploration (Zi), la focalisation électronique des éléments transducteurs actifs est modifiée respectivement au moyen de l'ouverture, auquel cas à chaque foyer est associée un masquage (B1, B2, B3) de l'ouverture, qui est une mesure de la pondération des signaux d'échos reçus par les éléments ultrasonores activés (2).

3. Procédé suivant la revendication 2, caractérisé par le fait que dans le cas de l'exploration d'une ligne d'exploration (Zi) située en dehors de la ligne centrale d'exploration, le masquage (B1, B2, B3) de l'ouverture est dissymétrique.

4. Procédé suivant la revendication 3, caractérisé par le fait que le masquage (B1, B2, B3) de l'ouverture est une fonction approximativement monotone.

5. Procédé suivant l'une des revendications 1 à 4, caractérisé par le fait que lors de l'exploration en parallèle dans la plage des plus grandes profondeurs, l'ouverture (A3) est réglée de telle sorte que le rayon marginal (R) ne s'écarte pas plus de 25° de la direction normale de la tête ultrasonore.

6. Dispositif pour la mise en œuvre du procédé suivant la revendication 1, comportant

une tête ultrasonore constituée par une multiplicité d'éléments transducteurs (2) disposés côte-à-côte,

un générateur (6) de signaux d'émission servant à alimenter les éléments transducteurs (2) avec des signaux d'excitation, à l'aide desquels les éléments transducteurs (2) sont excités en vue de l'émission d'impulsions ultrasonores le long d'une multiplicité de différentes lignes d'exploration rectilignes (Z1, Zi, Zn),

une multiplicité de canaux de réception qui sont associés aux éléments transducteurs et comportent chacun un amplificateur (10) ainsi qu'un circuit de retardement commandable (16, 18), branché en aval de cet amplificateur,

un circuit additionneur (22) servant à additionner les signaux de sortie des canaux de réception,

des circuits (24, 26) de traitement des signaux, servant à produire des signaux d'image à partir des signaux de sortie du circuit additionneur,

des dispositifs de commande (14) servant à commander la caractéristique directionnelle de la tête ultrasonore au moyen du réglage des retards fournis par les circuits de retardement, ainsi que pour la commande de l'ouverture de la tête ultrasonore en fonction de la profondeur d'exploration le long de chaque ligne d'exploration, caractérisé par le fait que

les amplificateurs contiennent chacun un amplificateur (10) de compensation de profondeur,

entre l'amplificateur (10) de compensation de profondeur et les circuits de retardement (16, 18) des canaux de réception se trouvent branchés des interrupteurs (12), qui sont fermés successivement par les dispositifs de commande, en vue d'augmenter l'ouverture de la tête ultrasonore, pendant la réception des signaux d'échos de chaque ligne d'exploration, conformément à un programme qui déclenche un décalage du centre de gravité de l'ouverture le long des éléments transducteurs, à l'exception du cas de l'exploration le long de la ligne centrale d'exploration,

les dispositifs de commande servant à commander la caractéristique directionnelle sont agencés de manière que la direction de réception recoupe la ligne respective d'exploration, aux profondeurs d'exploration correspondant aux différentes ouvertures, respectivement sous un angle qui est fonction de la ligne d'exploration et s'annule pour la ligne centrale d'exploration, et

les dispositifs de traitement des signaux sont agencés de manière que l'évaluation des signaux d'échos est limitée aux valeurs de signaux qui correspondent à la zone d'intersection de la direction respective de réception et de la ligne respective d'exploration.

7. Dispositif selon la revendication 6, caractérisé en ce qu'entre chaque composant (16, 18) servant à retarder les signaux et le circuit additionneur (22) se trouve intercalé respectivement un circuit de réglage de masquage (20), qui règle un masquage associé (B) d'une ouverture, sous la commande du dispositif (14) de commande prévu pour chaque ouverture (A).

8. Dispositif suivant la revendication 6 ou 7, caractérisé par le fait que chaque composant (16, 18) opère, pour réaliser le retardement des signaux, selon le principe du mélange des fréquences.

9. Dispositif suivant l'une des revendications 6 à 8, caractérisé par le fait que le dispositif de commande (14) est un microprocesseur.

FIG 1

FIG 2

FIG 3

FIG 4

EP 0 208 002 B1